# EUROPEAN PATENT SPECIFICATION

(11) **EP 2 666 827 B1**
(45) Date of publication and mention of the grant of the patent: **06.03.2019**
(21) Application number: 12736570.8
(22) Date of filing: 13.01.2012
(51) Int. Cl.: C08L 101/00, C08K 3/10, C08L 67/00, C08L 101/16

(54) **BIODEGRADABLE RESIN COMPOSITION**
BIOLOGISCH ABBAUBARE HARZZUSAMMENSETZUNG
COMPOSITION DE RÉSINE BIODÉGRADABLE

(30) Priority: 19.01.2011 JP 2011009118
(43) Date of publication of application: 27.11.2013
(73) Proprietor: Toyo Seikan Group Holdings, Ltd., Shinagawa-ku, Tokyo 1418627 (JP)
(72) Inventor: YOSHIKAWA, Seishi, Yokohama-shi Kanagawa 240-0062 (JP); KATAYAMA, Tsutaki, Yokohama-shi Kanagawa 240-0062 (JP); KOGURE, Masahito, Yokohama-shi Kanagawa 240-0062 (JP)
(74) Representative: J A Kemp
(86) International application number: PCT/JP2012/050610
(87) International publication number: WO 2012/099017

(56) References cited:
- JP-A- 6 049 342
- JP-A- 6 049 342
- JP-A- 9 316 181
- JP-A- 2003 268 222
- JP-A- 2007 046 050
- JP-A- 2008 179 788

## Description

### Technical Field:

This invention relates to a biodegradable resin composition that contains a sparingly hydrolyzing biodegradable resin such as polylactic acid as a chief component. More specifically, the invention relates to a biodegradable resin composition featuring improved biodegradability and transparency.

### Background Art:

In recent years, biodegradable resins are drawing attention in a variety of fields from the standpoint of environmental problems. Especially, biodegradable resins such as polylactic acid and the like undergo hydrolysis sparingly and remain stable even if they are brought in contact with water. Therefore, various kinds of formed articles using sparingly hydrolyzing biodegradable resins have been put to practical use. A patent document 1, for example, is proposing a lactic acid-type resin composition comprising a polylactic acid as a chief component and formed articles thereof.

The formed article made from the biodegradable resin such as polylactic acid undergoes hydrolysis sparingly and needs an extended period of time for being decomposed by the action of enzyme. Specifically, the formed article such as a container undergoes the decomposition from the surface of the formed article due to the action of enzyme and needs a very long period of time before the biodegradable resin forming the article is completely decomposed. Therefore, the biodegradability has not been utilized to a sufficient degree.

In order to solve this problem, the present applicant has previously proposed a biodegradable resin composition obtained by blending a biodegradable resin such as polylactic acid with an aliphatic polyester such as polyethylene oxalate as an ester decomposition promoter (see patent document 2).

The aliphatic polyester such as polyethylene oxalate that is added to the biodegradable resin composition easily hydrolyzes and works as an ester decomposition promoter. Namely, if mixed with water, the aliphatic polyester easily undergoes the hydrolysis to release an acid which works to promote the hydrolysis of the biodegradable resin. Therefore, the decomposition of the biodegradable resin with enzyme can be very promoted. Further, if the formed article such as the container made from the biodegradable resin composition is mixed into an aqueous solution of enzyme, then cracks occur in the formed article due to the hydrolysis of the aliphatic polyester. As a result, the enzyme easily permeates into the formed article permitting the biodegradable resin to be decomposed starting from the interior of the formed article, too. As a result, an advantage is obtained in that the decomposition of the biodegradable resin with the enzyme is very promoted even in the form of the formed articles.

A patent document 3 proposes a biodegradable polyester composition obtained by blending the polylactic acid with a small amount of polyglycolic acid.

A patent document 4 discloses a resin composition obtained by mixing a degradable resin such as polylactic acid with a block- or graft-copolymer that has a polyamino acid as a hydrophilic segment and a degradable polymer (e.g., polylactic acid) as a hydrophobic segment.

### Prior Art Documents:

### Patent Documents:

Patent document 1: JP-A-11-116788; Patent document 2: WO2008-038648; Patent document 3: JP-A-2009-13352; Patent document 4: JP-A-2000-345033

JP 6 049342 describes a container made using a thermoplastic polymer composition comprising a polylactic acid or a copolymer of a hydroxycarboxylic acid with lactic acid (e.g. a copolymer of L-lactide with a glycolide comprising a dimeric glycolic acid).

### Outline of the Invention:

### Problems that the Invention is to Solve:

As disclosed in the patent documents 2 and 3, the resin compositions obtained by blending the polylactic acid with the polyester such as polyethylene oxalate or polyglycolic acid have improved biodegradability but have low transparency. As disclosed in the patent document 4, further, the resin composition obtained by blending the polylactic acid with a copolymer having a hydrophilic segment such as polyamino acid and a hydrophobic segment such as degradable polymer, has transparency that is improved to some extent which, however, is not still sufficient. Besides, the improvement has not been realized to a sufficient degree in regard to biodegradability, either.

It is, therefore, an object of the present invention to provide a biodegradable resin composition having excellent biodegradability as well as excellent transparency.

### Means for Solving the Problems:

According to the present invention, there is provided a biodegradable resin composition comprising: a sparingly hydrolyzing biodegradable resin (A) that is a polylactic acid; an ester decomposition promoter (B), said ester decomposition promoter (B) being a copolymerized polyester that contains a segment (X) of a sparingly hydrolyzing polyester that is a polylactic acid and a segment (Y) of an easily hydrolyzing polyester that is a polyglycolic acid or polyoxalate, wherein said segment (X) and said segment (Y) are at a weight ratio of 10/90 < X/Y <75/25; and a decomposition assistant (C) that comprises a basic compound containing an alkali metal or an alkaline earth metal.

In the invention, the sparingly hydrolyzing polymer stands for the one of which the TOC (total organic carbon amount) is not more than 5 ppm as measured by preparing an aqueous dispersion solution of a sample polymer at a concentration of 100 mg/10 ml, hydrolyzing the aqueous dispersion solution at 45°C and at 100 rpm for 7 days, and diluting the aqueous dispersion solution into 10 times. Water-soluble polyester is not included in the hardly hydrolyzing polymer.

Further, the easily hydrolyzing property stands for the one of which the TOC (total organic carbon amount) is more than 5 ppm as measured in the same manner as described above.

In the biodegradable resin composition of the invention, it is desired that: (1) The copolymerized polyester is a block-copolymer of the segment (X) and the segment (Y) ; (2) The easily hydrolyzing polyester constituting the segment (Y) is a polyglycolic acid; (3) The copolymerized polyester is contained as the ester decomposition promoter (B) in an amount of 1 to 10 parts by weight per 100 parts by weight of the sparingly hydrolyzing biodegradable resin (A); (4) The basic compound containing an alkali metal or an alkaline earth metal is contained as the decomposition assistant (C) in an amount of 0.05 to 2 parts by weight per 100 parts by weight of the sparingly hydrolyzing biodegradable resin (A); and (5) One to 10% by weight of the sparingly hydrolyzing biodegradable resin (A) is a low molecular polylactic acid having a weight average molecular weight (Mw) in a range of not more than 50,000, when measured using GPC.

### Effects of the Invention:

In the biodegradable resin composition of the present invention, the ester decomposition promoter (B) is a copolymerized polyester that contains a segment (X) of a sparingly hydrolyzing polyester and a segment (Y) of an easily hydrolyzing polyester. If the copolymerized polyester comes in contact with water, the segment (Y) which is the easily hydrolyzing polyester undergoes the hydrolysis to release an acid that acts as an ester decomposition catalyst. This promotes the decomposition of the sparingly hydrolyzing biodegradable resin (A) in the composition.

Further, the above copolymerized polyester has the segment (X) of the sparingly hydrolyzing polyester. The segment (X) has a high affinity to the sparingly hydrolyzing biodegradable resin (A). Therefore, the copolymerized polyester that contains the segment (X) is allowed to disperse in the biodegradable resin (A) homogeneously and finely. Accordingly, the biodegradable resin composition of the invention that contains the copolymerized polyester as the ester decomposition promoter (B) has not only excellent biodegradability but also excellent transparency. For example, a film of a thickness of 200 *µ*m formed by using the above resin composition has a haze (cloudiness; JIS K6714) of as very small as not more than 15%.

According to the present invention as described above, the article formed by using the biodegradable resin composition has excellent transparency, can be used for a variety of applications, can be quickly degraded offering a very great advantage in avoiding environmental disruption caused by an increase in the refuse, or can be recovered after the use so as to be reused as the biodegradable resin contributing to recycling the resources.

### Brief Description of the Drawing:

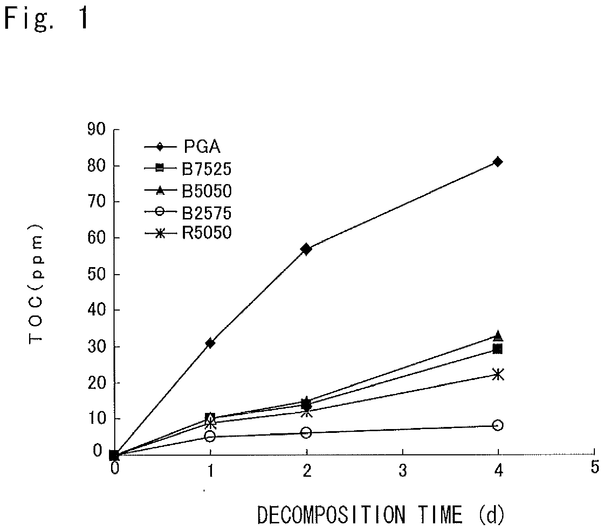

[Fig. 1] is a diagram showing relationships between the decomposition times and the TOC values of ester decomposition promoters used in Examples and in Comparative Examples.

### Modes for Carrying out the Invention:

The biodegradable resin composition of the present invention contains the sparingly hydrolyzing biodegradable resin (A) and the ester decomposition promoter (B) as main components, and is, further, suitably blended with additives including at least an ester decomposition assistant (C), and is prepared by melt-kneading these components together by using an extruder or the like.

### <Biodegradable resin (A)>

The biodegradable resin used in the present invention sparingly hydrolyzes, has the TOC (total organic carbon amount) of not more than 5 ppm as measured by the predetermined method, and is not water-soluble polyester. As the sparingly hydrolyzing biodegradable resin, polylactic acid is used.

The polylactic acid may be a 100% poly-L-lactic acid, a 100% poly-D-lactic acid, a melt blend of the poly-L-lactic acid and the poly-D-lactic acid, or a random or a block copolymer of the L-lactic acid and the D-lactic acid.

In the present invention, the polylactic acid is used as the biodegradable resin (A) from a standpoint that it is favorably used in the field of packing materials such as containers.

From the standpoint of formability, further, the above biodegradable resin (A) should have a molecular weight large enough for forming a film but, desirably, contains a low molecular component in a range in which the formability is not impaired. For instance, it is desired that the biodegradable resin (A) contains the polylactic acid of a low molecular weight of a weight average molecular weight (Mw) of not more than 50,000 and, preferably, from 500 to 2000 in an amount in a range of 1 to 10% by weight and, preferably, 1 to 5% by weight to maintain excellent biodegradability. The polylactic acid of such a low molecular weight can be quickly decomposed with the este decomposition promoter (B) down to a level of a monomer (lactic acid). Since the monomer works as the ester decomposition promoter, it is allowed to attain more excellent biodegradability.

The above biodegradable resin (A) has a TOC value of not more than 5 ppm, sparingly hydrolyzes and requires a very extended period of time for being decomposed. Therefore, the ester decomposition promoter (B) described below is added thereto to improve the rate of decomposition thereof.

### <Ester decomposition promoter (B)>

The present invention uses, as the ester decomposition promoter (B), a copolymerized polyester containing a segment (X) of the sparingly hydrolyzing polyester and a segment (Y) of the easily hydrolyzing polyester.

Namely, the copolymerized polyester that contains the segment (Y) of the easily hydrolyzing polyester undergoes the hydrolysis more easily than the biodegradable resin (A) and exhibits a TOC value of more than 5 ppm and, preferably, 10 to 50 ppm as measured by the method described above. Accordingly, the copolymerized polyester works as the ester decomposition promoter (B), i.e., releases an acid that works as a catalyst for decomposing ester when it is mixed with water. Namely, hydrolysis of the biodegradable resin (A) is very promoted with the acid.

Further, the copolymerized polyester contains the segment (X) of the sparingly hydrolyzing polyester. Like the above-mentioned sparingly hydrolyzing biodegradable resin (A), the polyester constituted by the segment (X) has a TOC value which is not more than 5 ppm and exhibits a high affinity to the biodegradable resin (A). Therefore, the copolymerized polyester can be homogeneously and finely dispersed in the sparingly hydrolyzing biodegradable resin (A) and, therefore, excellent transparency can be maintained.

In the present invention, the polyester forming the above sparingly hydrolyzing segment (X) is sparingly hydrolyzing, i.e., has a TOC value of not more than 5 ppm. From the standpoint of a high affinity to the biodegradable resin (A), an aliphatic polyester is preferred. Specifically, there is used a polyester of the same kind as the biodegradable resin (A) and, concretely, a polylactic acid.

Further, the polyester formed by the easily hydrolyzing segment (Y) has a TOC value of higher than 5 ppm and, preferably, not lower than 10 ppm. Preferably, there is used a polyester which, when mixed with water, easily releases an acid of which an aqueous solution or an aqueous dispersion solution of a concentration of 0.005 g/ml
exhibits a pH (25°C) of not higher than 4 and, specifically, not higher than 3. Specifically, a polyester that exhibits biodegradability, namely polyglycolic acid or polyoxalate, is used.

Here, the polyoxalate is a polyester that uses the oxalic acid as an acid component.

According to the invention, the sparingly hydrolyzing segment (X) and the easily hydrolyzing segment (Y) are contained at a weight ratio in a range of 10/90 < X/Y < 75/25. If the amount of the sparingly hydrolyzing segment (X) is too large, the TOC value tends to become not more than 5 ppm, and the copolymerized polyester fails to work as the ester decomposition promoter making it difficult to improve the biodegradability. On the other hand, if the amount of the easily hydrolyzing segment (Y) is too large, the copolymerized polyester fully works as the ester decomposition promoter but loses dispersing property in the biodegradable resin (A) causing a decrease in the transparency.

The copolymerized form of the copolymerized polyester may be either the block-copolymer or the random copolymer but, specifically desirably, is the block-copolymer. In the case of the block-copolymer, the segment (X) exhibits affinity to the biodegradable resin (A) and the segment (Y) exhibits ester decomposition capability to a sufficient degree making it possible to maximize the biodegradability yet maintaining homogeneously dispersing property (i.e., transparency) in the biodegradable resin (A).

From the standpoint of maintaining the dispersing property in the sparingly hydrolyzing biodegradable resin (A), it is desired that the copolymerized polyester has a weight average molecular weight (Mw) in a range of 1,000 to 200,000.

The copolymerized polyester used in the invention may contain copolymer components other than the above-mentioned segment (X) and the segment (Y) so far as the TOC is more than 5 ppm and the affinity to the biodegradable resin (A) and the ester decomposition promoting property are not impaired. As the copolymer components, there can be exemplified polyhydric alcohols such as ethylene glycol, propylene glycol, butanediol, octanediol, dodecanediol, neopentyl glycol, glycerin, pentaerythritol, sorbitan, bisphenol A and polyethylene glycol; dicarboxylic acids such as oxalic acid, succinic acid, adipic acid, sebacic acid, glutaric acid, decanedicarboxylic acid, cyclohexanedicarboxylic acid, terephthalic acid, isophthalic acid and anthracenedicarboxylic acid; hydroxycarboxylic acids such as glycolic acid, L-lactic acid, D-lactic acid, hydroxypropionic acid, hydroxybutyric acid, hydroxyvaleric acid, hydroxycaproic acid, mandelic acid and hydroxybenzoic acid; and lactones such as glycolide, caprolactone, butyllactone, valerolactone, propiolactone and undecalactone.

It is desired that the copolymerized polyester used as the ester decomposition promoter (B) is, usually, used in an amount of 0.01 to 30 parts by weight and, specifically, 1 to 10 parts by weight per 100 parts by weight of the biodegradable resin (A) though the amount thereof may vary depending on the kind thereof. If the amount of the ester decomposition promoter (B) is too small, it may become difficult to promote the decomposition of the biodegradable resin (A). If the amount thereof is too large, it is probable that the biodegradable resin (A) starts decomposing in a stage of preparing the resin composition or in a stage of using it as a formed article. Besides, the ester decomposition promoter (B) cannot be homogeneously dispersed and the transparency is impaired.

The above-mentioned copolymerized polyester can be obtained by polycondensing dibasic acid components and diol components for forming polyesters of the segments (X) and (Y), lactone and the like as well as acids and alcohol components of the copolymerizable components used as required in a customary manner. When a block-copolymer is to be prepared in this case, a polyester of the segment (X) or the segment (Y) is prepared and, thereafter, a component for forming the segment (Y) or the segment (X) is added thereto so as to be copolymerized therewith.

Formation of the block-copolymer can be confirmed from the expression of a melting peak that stems from the segment (X) and a melting peak that stems from the segment (Y) relying upon the differential calorimetry.

### <Other additives>

The biodegradable resin composition of the present invention contains the above biodegradable resin (A) and the ester decomposition promoter (B) (copolymerized polyester) as chief components and is, further, blended with an ester decomposition assistant (C) that is a basic compound containing an alkali metal or an alkaline earth metal.

In general, an ester decomposition assistant (C) is a component used for promoting the hydrolysis of the copolymerized polyester (i.e., ester decomposition promoter (B)) and its representative examples are inorganic particles such as a basic compound containing an alkali metal or an alkaline earth metal; and zeolite and ion-releasing filler that release ions of an alkali metal or an alkaline earth metal;. Namely, the inorganic particles promote the hydrolysis of the ester decomposition promoter (B) when the inorganic particles are in formed articles and/or in the presence of water. Besides, the inorganic particles by themselves have a function for promoting the hydrolysis of the biodegradable resin (A).

As the basic compound containing an alkali metal or an alkaline earth metal, there can be exemplified sodium carbonate, potassium carbonate, calcium carbonate, magnesium carbonate, sodium hydrogencarbonate, potassium hydrogencarbonate, sodium silicate, potassium silicate, calcium silicate, magnesium silicate, sodium phosphate, calcium hydroxide and magnesium hydroxide.

As the zeolite, there can be exemplified a variety of natural or synthetic zeolites containing an alkali metal or alkaline earth metal ions as exchangeable ions.

As the ion-releasing filler, there can be exemplified oxide glasses such as aluminosilicate glass, borosilicate glass and soda-lime glass which contain an alkali metal or an alkaline earth metal, and fluoride glasses such as zirconium fluoride glass and the like glasses.

The above ester decomposition assistants (C) may be used alone or being mixed together, provided that the composition comprises a basic compound containing an alkali metal or an alkaline earth metal.

Among the inorganic particles exemplified above according to the present invention, it is desired to use the basic compound containing calcium and/or sodium, zeolite which releases calcium ions and/or sodium ions, or filler that releases calcium ions and/or sodium ions and, specifically, to use the calcium carbonate and the sodium carbonate from the standpoint of little affecting the environment, without adversely affecting the properties of the biodegradable resin (A) and without undergoing the decomposition of the particles while the resin composition is being heat-formed.

It is, further, desired that the inorganic particles have an average grain size (average grain size Dso calculated as volume by the laser diffraction/light scattering method) of not larger than 10 *µ*m and, specifically, in a range of 0.01 *µ*m to 5 *µ*m from the standpoint of being homogeneously dispersed in the resin composition.

It is desired that the inorganic particles are used in an amount of 0.05 to 2 parts by weight and, specifically, 0.05 to 1 part by weight per 100 parts by weight of the ester biodegradable resin (A). If the amount of the inorganic particles is too large, the heat-formability and transparency of the resin composition are impaired, hydrolysis of the ester decomposition promoter (B) and the biodegradable resin (A) is promoted in the article formed by using the resin composition causing such inconvenience as to impair the form of the article. Excess inorganic particles also impair the property of being homogeneously dispersed in the biodegradable resin (A) and decrease the transparency. If the amount of the inorganic particles is smaller than the above range, the biodegradable resin cannot be decomposed at a sufficiently increased rate.

Of the above inorganic particles, the sodium carbonate most greatly works to promote the hydrolysis of the ester decomposition promoter (B) and the biodegradable resin (A). If the sodium carbonate is used alone, therefore, the molecular weight of the biodegradable resin (A) is often very decreased during the heat-forming and, besides, the commercial value of the product is often deteriorated due to discoloration of the biodegradable resin (A). If the sodium carbonate is used, therefore, it is desired that the amount thereof is in a range of 0.1 to 35 ppm relative to the biodegradable resin (A) and, besides, it is used in combination with the calcium carbonate. This makes it possible to suppress a decrease in the molecular weight of the biodegradable resin (A) yet promoting the decomposition of the polyglycolic acid and to increase the rate of decomposition of the obtained biodegradable resin composition with the enzyme. If the sodium carbonate and calcium carbonate are used in combination as described above, it is desired that the total amount thereof is within the above-mentioned range.

It is also allowable to suitably add a variety of additives for resins in addition to the above ester decomposition assistant (C). For instance, there can be added plasticizer, photo stabilizer, antioxidant, ultraviolet ray absorber, flame retardant, coloring agent, pigment, filler, parting agent, antistatic agent, perfume, foaming agent, anti-bacterial/anti-molding agent and nucleating agent in amounts with which they do not impair the formability or the degradability of the biodegradable resin. As required, further, it is allowable to add any further thermoplastic resins.

### <Preparation of the biodegradable resin composition and use>

The biodegradable resin composition of the invention containing the above various components can be prepared by mixing together the above components (A) and (B) as well as various additives such as the ester decomposition assistant (C), etc. that are suitably added, and melt-kneading the mixture in an extruder at a temperature (e.g., about 150°C to about 240°C) at which the components are not decomposed. In this case, the ester decomposition promoter (B) (i.e., copolymerized polyester) and the biodegradable resin (A) may be directly mixed together, or master batches of the ester decomposition promoter (B) and other components may be prepared and may be mixed to the biodegradable resin (A).

The resin composition is put to use as articles of a variety of forms through a forming method known per se. such as extrusion forming, injection forming or compression forming.

Specifically, the resin composition of the invention has excellent transparency and exhibits a haze of not higher than 15% when it is formed into, for example, a film of a thickness of 200 *µ*m. Therefore, the resin composition can be used very favorably in the field of packing materials that require legibility of the contents.

Namely, in the field of packing materials, the above biodegradable resin composition can be used as a film or a sheet for packing. Specifically, the film can be sealed and stuck along the three sides so as to be used as a bag-like container (pouch).

Through the vacuum forming, compressed-air forming, expansion forming or plug-assist forming, further, the film or the sheet can be used in the form of a cup-like or tray-like container. The cup-like container or the tray-like container may be directly formed by the injection forming or the compression forming. Further, a preform of the shape of a test tube may be formed by the injection forming and may then be subjected to the blow forming to use it as a container of the shape of a bottle.

As required, further, the above formed articles of various shapes can be used as multilayered structures laminated with other resins relying on the forming by using an extruder having a multilayered multiplexing die or by using a coinjection machine having a plurality of injection gates. Further, when the film is to be laminated in a multiplicity of layers, there can be employed a dry lamination method using an adhesive, an extrusion-coating method or a sandwich lamination method of laminating the films with a molten resin.

### <Method of decomposition>

The article such as the container formed by using the biodegradable resin composition of the present invention can be disposed by simply feeding it into a decomposition vessel but may also be suitably cut and crushed into small pieces and, thereafter, fed into the decomposition vessel so as to be decomposed.

The decomposition treatment is conducted in an aqueous medium in the presence of a catalyst. As the catalyst, there can be used solid acid catalyst containing water, such as acid clay or active clay having a high specific surface area obtained by treating a smectite clay such as bentonite. It is, however, desired to use an enzyme. Namely, use of the enzyme as the catalyst is very advantageous from the standpoint of effects upon the environment and the treatment of waste matters. The use of the enzyme is also very advantageous from the stand point of enabling the formed article to be decomposed to a complete collapse in short periods of time since the hydrolysis of the ester decomposition promoter (B) proceeds from the interior of the formed article due to water that permeates into the formed article promoting the hydrolysis of the biodegradable resin (A) and, at the same time, the decomposition of the biodegradable resin (A) occurs from the interior of the formed article due to the enzyme quickly permeating into the formed article (waste matter).

As the enzyme, there can be exemplified protease, cellulase, cutinase and lipase. These enzymes may or may not have been solidified. For instance, the Protease K manufactured by Wako Pure Chemical Industries, Ltd. can be used in the form of an aqueous solution. Further, microorganisms may be put into the reaction solution and an exobacterial enzyme thereof may be used. When the microorganisms are to be added, there may be also added culture components or nutrient components required by the microorganisms.

During the above decomposition treatment, the pH of the enzyme reaction solution must be maintained constant. To maintain the pH constant, for example, the reaction solution is exchanged or a buffer solution is used for the reaction solution. As the buffer solution, there can be used a glycine-hydrochloric acid buffer solution, phosphoric acid buffer solution, tris-hydrochloric acid buffer solution, acetic acid buffer solution, citric acid buffer solution, citric acid-phosphoric acid buffer solution, boric acid buffer solution, tartaric acid buffer solution or glycine-sodium hydroxide buffer solution. Instead of using the buffer solution, further, it is also allowable to use water as a solvent and suitably add an acid or an alkali to the reaction solution, or use a solid neutralizing agent. As the solid neutralizing agent, there can be used, for example, calcium carbonate, chitosan or deprotonated ion-exchange resin. As required, further, there may be added an organic solvent such as ethanol or the like.

The decomposition treatment is desirably conducted by mixing and stirring waste formed articles of the biodegradable resin composition in an aqueous solution of enzyme in the decomposition vessel. Here, the amount of the enzyme that is used is, usually, about 0.01 to 10 parts by weight per 100 parts by weight of the sparingly hydrolyzing biodegradable resin though it may vary depending upon the activity of the enzyme used. The decomposition treatment is conducted by throwing the waste formed articles into the aqueous solution of enzyme filled in the decomposition vessel and stirring them therein.

Here, the above solid acid catalyst, when it is to be used, is preferably dispersed in a suitable organic solvent and the waste formed articles are thrown into the dispersion solution since the solid acid catalyst contains water.

It is desired that the decomposition treatment is conducted being heated at a temperature lower than a temperature at which the enzyme loses activity (usually, at about 50°C). The above heating further promotes the hydrolysis of the polyglycolic acid (B).

As the decomposition is carried out as described above and the formed articles are completely collapsed, the biodegradable resin has now been decomposed down to the monomers and oligomers that constitute it. The monomers and oligomers may be taken out and put to the energy conversion such as methane fermentation by utilizing microorganisms. Or, as required, the monomers and oligomers can be recovered by the separation operation such as distillation or extraction, and reused for the synthesis of biodegradable resins.

### EXAMPLES

In the following Examples and Comparative Examples, the haze, TOC (total amount of organic carbon eluted out) and decomposition with the enzyme were measured by the methods described below.

### Measuring the haze:

By using a color computer [SM-4: Suga Test Instruments Co., Ltd.], the films were measured for their hazes in compliance with the JIS K6714.

### Measuring the TOC (total amount of organic carbon eluted out) (evaluating the hydrolyzing property).

By using a freeze pulverizer (JFC-300 manufactured by Japan Analytical Industries Co., Ltd.), a sample polymer was freeze-pulverized. 100 Milligrams of the powdered sample polymer was thrown together with 10 ml of distilled water into a 25-ml vial, and was shook at 45°C and 100 rpm so as to be hydrolyzed. The supernatant solution of the sample solution was taken out in an amount of 1 ml for every passage of time (every day) after the start of the testing, was passed through a filter of 0.45 *µ*m, and was diluted into 10 times to measure the total amount of the organic carbon that has eluted out by using the TOC-5000A manufactured by Shimadzu Corporation. The measured value was converted into a value of 100 mg/10 ml, was regarded as a TOC value, and the amount of hydrolysis was evaluated relying on the TOC value.

### Testing the decomposition with the enzyme.

20 Milligrams of a Cryptococcus sp. S-2-derived lipase (JP-A-2004-73123, National Research Institute of Brewing) was dissolved in 1 ml of a 0.05M Tris-HCL buffer solution (pH 8.0) containing 50 w/w % glycerin to prepare a CLE enzyme solution.

12 Microliters of the CLE enzyme solution was added to 10 ml of a 60 mmol/L-phosphoric acid buffer solution of pH of 7 to prepare an enzymatic decomposition solution.

The film of a predetermined thickness prepared by using the sample biodegradable resin composition was introduced together with 10 ml of the above enzymatic decomposition solution into a 25-ml vial and was shook at 45°C and 100 rpm for 6 days. To avoid an extreme decrease in the pH, the decomposition solution was replaced every other day. After 6 days have passed, the film was taken out, was dried in an oven maintained at 45°C overnight and was measured for its weight.

The amount of the film decomposed with the enzyme was calculated by subtracting the above measured value from the initial weight of the film.

### <Preparation of copolymerized polyesters>

### 1. Preparation of block-copolymerized polyesters.

Predetermined amounts of an L-lactide (produced by Musashino Chemical Laboratory, Ltd.) and a tin 2-ethylhexanoate (produced by Wako Pure Chemical Industries, Ltd.) were introduced into a 300-ml separable flask equipped with a mantle heater, a stirrer and a nitrogen introduction pipe, and were reacted together in a nitrogen stream for 30 minutes while heating the interior of the flask at 100°C to 200°C. Next, a predetermined amount of a glycollide (produced by Sigma-Aldrich Japan Co.) was added thereto, and the reaction was continued for another 30 minutes. Thereafter, at a temperature therein of 200°C and under a reduced pressure of 0.1 to 0.5 mmHg, the stirring was conducted for 30 minutes, and the unreacted monomer and oligomer were distilled off.

In preparing the copolymerized polyester as described above, the lactide and the glycollide were fed at weight ratios as shown in Table 1 to obtain four kinds of block-copolymerized polyesters B7525, B5050, B2575 and B1090.

The obtained copolymerized polyesters were the block-copolymers as confirmed from the presence of melting peaks of the PLA and melting peaks of the PGA based on the DSC measurement.

Further, the obtained copolymerized polyesters were measured for their weight average molecular weights by using the GPC manufactured by TOSOH CORPORATION. The results were as shown in Table 1.

The high molecular copolymerized polyesters were measured by using HFIP-605 as the column, HFIP (hexafluoroisopropanol) as the eluent and polymethyl methacrylate as the standard substance.

The low molecular copolymerized polyesters were measured by using TSKgel Super HM-HX2 as the column, TSKguard column Super H-H as the guard column, chloroform as the eluent and polystyrene as the standard substance.

### 2. Preparation of a random copolymerized polyester.

Predetermined amounts of the L-lactide, glycollide and tin 2-ethylhexanoate were introduced into the 300-ml separable flask equipped with a mantle heater, a stirrer and a nitrogen introduction pipe, and were reacted together in a nitrogen stream for one hour while heating the interior of the flask at 100°C to 200°C. Thereafter, at a temperature therein of 200°C and under a reduced pressure of 0.1 to 0.5 mmHg, the stirring was conducted for 30 minutes, and the unreacted monomer and oligomer were distilled off.

In preparing the copolymerized polyester as described above, the lactide and the glycollide were fed at weight ratio of 50/50 to obtain a random-copolymerized polyester R5050.

The random-copolymerized polyester was measured for its weight average molecular weight in the same manner as described above. The result was as shown in Table 1.

Since the DSC measurement showed only one melting peak, it was decided to be a random-copolymer.

### 3. Preparation of a polyglycolic acid.

A polyglycolic acid (PGA) was prepared by conducting the reaction in quite the same manner as that of preparing the random-copolymerized polyester but without using the L-lactide.

The polyglycolic acid was measured for its weight average molecular weight in the same manner as the one described above. The result was as shown in Table 1.

### <Testing the hydrolyzing property>

The block-copolymer and random-copolymer of the lactic acid and glycolic acid and polyglycolic acid prepared above were measured for their TOC values relying on the method described above. Fig. 1 shows relationships between the days required for the hydrolysis and the TOC values. Table 1 shows the TOC values after 4 days of hydrolysis (after maintained at 45°C for 4 days).

**Table 1**

| | Kind of copolymer | Feed ratio Lactide/ glycollide (wt/wt) | Mw | TOC* (ppm) |
|---|---|---|---|---|
| B7525 | block | 75/25 | 53000 | 8 |
| B5050 | block | 50/50 | - | 33 |
| B2575 | block | 25/75 | - | 30 |
| B1090 | block | 10/90 | - | 40 |
| R5050 | random | 50/50 | 14000 | 22 |
| PGA | homo | 0/100 | 20000 | 81 |

| | | | | |
|---|---|---|---|---|
| *TOC represents values after 4 days at 45°C. | | | | |

From the above results, it was learned that the hydrolyzing property was high when the glycolic acid was contained in large amounts in the copolymerized polyester. From the results of B5050 and R5050, further, it was learned that the block-copolymer was more hydrolyzing despite the blending ratio was the same.

### <Comparative Example 1>

As the polylactic acid (PLA), there was provided 4032D (D-lactic acid, 1.4%) produced by Nature Works LLC having the following properties,
Weight average molecular weight: 160,000
TOC value (after hydrolyzed for 7 days): 4 ppm

The block-copolymerized polyester B5050 synthesized above was melt-kneaded as an ester decomposition promoter together with the above polylactic acid at a weight ratio shown in Table 2 to prepare a biodegradable resin composition.

By using a very small kneading machine (manufactured by Toyo Seiki Seisaku-sho, Ltd.), the obtained resin composition was kneaded at a forming temperature of 220°C and a screw revolving speed of 50 rpm and was pelletized. The pellets were melted at 220°C for 5 minutes and were heat-pressed (hot-pressed) under a pressure of 80 to 100 Kgf/cm² to prepare a film of a thickness of 200 *µ*m. The film was measured for its haze and the amount of decomposition with the enzyme by the methods described above. The results were as shown in Table 2.

### <Comparative Examples 2 and 3>

Biodegradable resin compositions were prepared in the same manner as in Comparative Example 1 but using random-copolymerized polyesters R2575 and R5050 as ester decomposition promoters, and films were formed by using them in the same manner as in Comparative Example 1. The R2575 was a random-copolymerized polyester obtained by feeding the lactide and the glycollide at a weight ratio of 25/75. The hazes and the amounts of decomposition with the enzyme were measured in the same manner as in Comparative Example 1. Table 2 shows the amounts of the components used for preparing the compositions, and also shows the measured results of the hazes and the amounts of decomposition with the enzyme.

### <Example 1>

A calcium carbonate (Brilliant 1500 produced by SHIRAISHI KOGYO) was provided as the decomposition assistant.

The calcium carbonate and the block-copolymerized polyester B5050 were added at a blending ratio shown in Table 2 to the polylactic acid to prepare a biodegradable resin composition and form a film in the same manner as in Comparative Example 1. The film was measured for its haze and the amount of decomposition with the enzyme in the same manner as in Comparative Example 1. Table 2 shows the amounts of the components used for preparing the composition, and also shows the measured results of the haze and the amount of decomposition with the enzyme.

### <Example 2>

A low-molecular polylactic acid (PLA) having a weight average molecular weight of 40,000 was provided.

The low-molecular polylactic acid, calcium carbonate (decomposition assistant) and the block-copolymerized polyester B5050 were added at a blending ratio shown in Table 2 to the high-molecular polylactic acid to prepare a biodegradable resin composition and form a film in the same manner as in Example 1. The film was measured for its haze and the amount of decomposition with the enzyme in the same manner as in Example 1. Table 2 shows the amounts of the components used for preparing the composition, and also shows the measured results of the haze and the amount of decomposition with the enzyme.

### <Comparative Examples 4 to 6>

Biodegradable resin compositions were prepared in the same manner as in Comparative Example 1 but using, as ester decomposition promoters, the polyglycolic acid, the block-copolymerized polyester B7525 or the block-copolymerized polyester B1090 instead of using the block-copolymerized polyester, and films were formed by using them in the same manner as in Comparative Example 1. The films were measured for their hazes and the amounts of decomposition with the enzyme in the same manner as in Comparative Example 1. Table 2 shows the amounts of the components used for preparing the compositions, and also shows the measured results of the hazes and the amounts of decomposition with the enzyme.

### <Comparative Example 7>

A biodegradable resin composition was prepared in the same manner as in Comparative Example 1 but using the polyglycolic acid as the ester decomposition promoter, and adding the polyglycolic acid together with the calcium carbonate (decomposition assistant) into the high-molecular polylactic acid in amounts as shown in Table 2, and a film was formed by using it in the same manner as in Comparative Example 1. The film was measured for its haze and amount of decomposition with the enzyme in the same manner as in Comparative Example 1. Table 2 shows the amounts of the components used for preparing the composition, and also shows the measured results of the haze and the amount of decomposition with the enzyme.

### <Comparative Example 8>

A film was prepared in the same manner as in Comparative Example 1 but only using the polylactic acid without using the ester decomposition promoter at all, and was measured for its haze and the amount of decomposition with the enzyme in the same manner as in Comparative Example 1. The results were as shown in Table 2.

### <Comparative Example 9>

A film was prepared by adding, to the polylactic acid used in Comparative Example 1, the low-molecular polylactic acid used in Example 5 in an amount shown in Table 2, and was measured for its haze and the amount of decomposition with the enzyme in the same manner as in Comparative Example 1. The results were as shown in Table 2.

| Table 2 | | | | | | | |
|---|---|---|---|---|---|---|---|
| | | | | | | | |
| | PLA | Low-mole | Ester decomposition | | Decomposition | Haze of film (%) | Amount of decomposition with enzyme after 4 days |
| | Blended amount | Blended amount | Kind | Blended amount | Blended amount | | |
| Comp. Ex. 1 | 9.5 | - | B5050 | 0.5 | - | 8 | 40 |
| Comp. Ex. 2 | 9.5 | - | R2575 | 0.5 | - | 6 | 44 |
| Comp. Ex. 3 | 9.5 | - | R5050 | 0.5 | - | 6 | 33 |
| Ex. 1 | 9.49 | - | B5050 | 0.5 | 0.01 | 8 | 49 |
| Ex. 2 | 9 | 0.49 | B5050 | 0.5 | 0.01 | 8 | 65 |
| Comp. Ex. 4 | 9.5 | - | PGA | 0.5 | - | 60 | 60 |
| Comp. Ex. 5 | 9.5 | - | B7525 | 0.5 | - | 8 | 24 |
| Comp. Ex. 6 | 9.5 | - | B1090 | 0.5 | - | 40 | 58 |
| Comp. Ex. 7 | 9.4 | | PGA | 0.4 | 0.2 | 70 | 90 |
| Comp. Ex. 8 | 10 | - | - | - | - | 6 | 24 |
| Comp. Ex. 9 | 9.5 | 0.5 | - | - | - | 6 | 28 |

## Claims

1. A biodegradable resin composition comprising:
- a sparingly hydrolyzing biodegradable resin (A) that is a polylactic acid;
- an ester decomposition promoter (B), said ester decomposition promoter (B) being a copolymerized polyester that contains a segment (X) of a sparingly hydrolyzing polyester that is a polylactic acid and a segment (Y) of an easily hydrolyzing polyester that is a polyglycolic acid or polyoxalate, wherein said segment (X) and said segment (Y) are at a weight ratio of 10/90 < X/Y <75/25; and
- a decomposition assistant (C) that comprises a basic compound containing an alkali metal or an alkaline earth metal.

2. The biodegradable resin composition according to claim 1, wherein said copolymerized polyester is a block-copolymer of said segment (X) and said segment (Y).

3. The biodegradable resin composition according to claim 1, wherein the easily hydrolyzing polyester constituting said segment (Y) is a polyglycolic acid.

4. The biodegradable resin composition according to claim 1, wherein said copolymerized polyester is contained as the ester decomposition promoter (B) in an amount of 1 to 10 parts by weight per 100 parts by weight of said sparingly hydrolyzing biodegradable resin (A).

5. The biodegradable resin composition according to claim 1, wherein said basic compound containing an alkali metal or an alkaline earth metal is contained as said decomposition assistant (C) in an amount of 0.05 to 2 parts by weight per 100 parts by weight of said sparingly hydrolyzing biodegradable resin (A).

6. The biodegradable resin composition according to claim 1, wherein 1 to 10% by weight of said sparingly hydrolyzing biodegradable resin (A) is a low molecular polylactic acid having a weight average molecular weight (Mw) in a range of not more than 50,000 when measured using GPC.

7. The biodegradable resin composition according to claim 1, wherein said copolymerized polyester is a random copolymerized polyester of a constituent unit (X) that stems of the sparingly hydrolyzing polyester and a constituent unit (Y) that stems of the easily hydrolyzing polyester.

8. The biodegradable resin composition according to claim 7, wherein the random copolymerized polyester is contained in an amount of 1 to 10 parts by weight per 100 parts by weight of the sparingly hydrolyzing biodegradable resin (A), and the random copolymerized polyester has a TOC value of not less than 10 ppm.

## Patentansprüche

1. Biologisch abbaubare Harzzusammensetzung, umfassend:
- ein kaum hydrolysierendes biologisch abbaubares Harz (A), das eine Polymilchsäure ist;
- einen Ester-Abbaupromotor (B), wobei der Ester-Abbaupromotor (B) ein copolymerisierter Polyester ist, der ein Segment (X) eines kaum hydrolysierenden Polyesters, der eine Polymilchsäure ist, und ein Segment (Y) eines einfach hydrolysierenden Polyesters, der eine Polyglycolsäure oder ein Polyoxalat ist, enthält, wobei das Segment (X) und das Segment (Y) in einem Gewichtsverhältnis von 10/90 < X/Y <75/25 sind; und
- ein Abbaumittel (C), das eine basische Verbindung umfasst, die ein Alkalimetall oder ein Erdalkalimetall enthält.

2. Biologisch abbaubare Harzzusammensetzung nach Anspruch 1, wobei der copolymerisierte Polyester ein Block-Copolymer des Segments (X) und des Segments (Y) ist.

3. Biologisch abbaubare Harzzusammensetzung nach Anspruch 1, wobei der einfach hydrolysierende Polyester, der das Segment (Y) bildet, eine Polyglycolsäure ist.

4. Biologisch abbaubare Harzzusammensetzung nach Anspruch 1, wobei der copolymerisierte Polyester als Ester-Abbaupromotor (B) in einer Menge von 1 bis 10 Gewichtsteilen pro 100 Gewichtsteile des kaum hydrolysierenden biologisch abbaubaren Harzes (A) enthalten ist.

5. Biologisch abbaubare Harzzusammensetzung nach Anspruch 1, wobei die basische Verbindung, die ein Alkalimetall oder ein Erdalkalimetall enthält, als das Abbaumittel (C) in einer Menge von 0,05 bis 2 Gewichtsteilen pro 100 Gewichtsteile des kaum hydrolysierenden biologisch abbaubaren Harzes (A) enthalten ist.

6. Biologisch abbaubare Harzzusammensetzung nach Anspruch 1, wobei 1 bis 10 Gew.-% des kaum hydrolysierenden biologisch abbaubaren Harzes (A) eine niedermolekulare Polymilchsäure ist, die ein Gewichtsmittel des Molekulargewichts (Mw) in einem Bereich von nicht mehr als 50.000 hat, wenn es unter Verwendung von GPC gemessen wird.

7. Biologisch abbaubare Harzzusammensetzung nach Anspruch 1, wobei der copolymerisierte Polyester ein zufälliger copolymerisierter Polyester einer Komponenteneinheit (X), die vom kaum hydrolysierten Polyester stammt, und einer Komponenteneinheit (Y), die vom einfach hydrolysierten Polyester stammt, ist.

8. Biologisch abbaubare Harzzusammensetzung nach Anspruch 7, wobei der zufällige copolymerisierte Polyester in einer Menge von 1 bis 10 Gewichtsteilen pro 100 Gewichtsteile des kaum hydrolysierten biologisch abbaubaren Harzes (A) enthalten ist und der zufällige copolymerisierte Polyester einen TOC-Wert von nicht weniger als 10 ppm hat.

## Revendications

1. Composition de résine biodégradable comprenant :
- une résine biodégradable hydrolysant avec modération (A) qui est un acide polylactique ;
- un accélérateur de décomposition d'ester (B), ledit accélérateur de décomposition d'ester (B) étant un polyester copolymérisé qui contient un segment (X) d'un polyester hydrolysant avec modération qui est un acide polylactique et un segment (Y) d'un polyester hydrolysant facilement qui est un acide polyglycolique ou un polyoxalate, ledit segment (X) et ledit segment (Y) étant présents dans un rapport pondéral de 10/90 < X/Y <75/25 ; et
- un assistant de décomposition (C) qui comprend un composé de base contenant un métal alcalin ou un métal alcalino-terreux.

2. Composition de résine biodégradable selon la revendication 1, dans laquelle ledit polyester copolymérisé est un copolymère séquencé dudit segment (X) et dudit segment (Y).

3. Composition de résine biodégradable selon la revendication 1, dans laquelle le polyester hydrolysant facilement constituant ledit segment (Y) est un acide polyglycolique.

4. Composition de résine biodégradable selon la revendication 1, dans laquelle ledit polyester copolymérisé est contenu en tant qu'accélérateur de décomposition d'ester (B) dans une quantité de 1 à 10 parts en poids pour 100 parts en poids de ladite résine biodégradable hydrolysant avec modération (A).

5. Composition de résine biodégradable selon la revendication 1, dans laquelle ledit composé de base contenant un métal alcalin ou un métal alcalino-terreux est contenu en tant que dit assistant de décomposition (C) dans une quantité de 0,05 à 2 parts en poids pour 100 parts en poids de ladite résine biodégradable hydrolysant avec modération (A).

6. Composition de résine biodégradable selon la revendication 1, dans laquelle de 1 à 10 % en poids de ladite résine biodégradable hydrolysant avec modération (A) est un acide polylactique de faible poids moléculaire présentant un poids moléculaire moyen en poids (Mw) situé dans une plage de pas plus de 50 000 lorsque mesuré à l'aide de chromatographie par perméation de gel (GPC).

7. Composition de résine biodégradable selon la revendication 1, dans laquelle ledit polyester copolymérisé est un polyester copolymérisé de manière aléatoire d'une unité constitutive (X) qui provient du polyester hydrolysant avec modération et d'une unité constitutive (Y) qui provient du polyester hydrolysant facilement.

8. Composition de résine biodégradable selon la revendication 7, dans laquelle le polyester copolymérisé de manière aléatoire est contenu dans une quantité de 1 à 10 parts en poids pour 100 parts en poids de la résine biodégradable hydrolysant avec modération (A), et le polyester copolymérisé de manière aléatoire présente une valeur COT (carbone organique total) de pas moins de 10 ppm.
